(19) Europäisches Patentamt
European Patent Office
Office européen des brevets

(11) **EP 4 687 283 A1**

(12) **EUROPEAN PATENT APPLICATION**

(43) Date of publication:
**04.02.2026 Bulletin 2026/06**

(21) Application number: **24192703.7**

(22) Date of filing: **02.08.2024**

(51) International Patent Classification (IPC):
*H02P 7/00* *(2016.01)*

(52) Cooperative Patent Classification (CPC):
**H02P 7/0094**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Iskra Mehanizmi d.o.o.**
**4210 Brnik - Aerodrom (SI)**

(72) Inventors:
• **Mrljak, Luka**
 **4220 Škofja Loka (SI)**
• **Gašperšič, Matija**
 **4244 Podnart (SI)**
• **Kobal, Boštjan**
 **1360 Vrhnika (SI)**

(74) Representative: **Macek, Gregor**
**ITEM d.o.o.**
**Resljeva 16**
**1000 Ljubljana (SI)**

(54) **ACTUATOR SYSTEM WITH CONTROLLED HARD STOP**

(57) The invention relates to an actuator system with hard stop, and a method, to minimize system damage resulting from the hard stop, comprising an electric motor (2), an actuator arm (3), a mechanical transmission system (4), and a control system measuring the current through the electric motor (2) and regulating the voltage on the electric motor (2). The control system comprises a current measuring device (7) producing a current signal (15), a conversion subsystem (8), a logic subsystem (9) producing voltage control signals (18), and a voltage control subsystem (10) controlling the voltage level and polarity on the electric motor (2) based on the voltage control signals (18). The logic subsystem (9) and the voltage control subsystem (10) operate according to the method, which lowers the voltage on the electric motor (2) based on the number of spikes in the current through the electric motor (2).

Figure 2

EP 4 687 283 A1

**Description**

The invention relates to actuators driven by electric motors which move the actuator arm from point A to point B, and the actuator arm is mechanically stopped at point B by a mechanical barrier, i.e. hard stop.

A movement path of the actuator arm from point A to point B is usually linear, but can also be rotational or is shaped differently, for example a curved path.

One possible application of actuator systems is in locking mechanisms as disclosed for example in EP2166180A2. For example, the actuator arm's motion from point A to point B corresponds to transitioning the lock mechanism from the locked to the unlocked position; conversely, movement from point B to point A corresponds to transitioning the lock mechanism from the unlocked to the locked position.

Electric actuator systems in state of the art comprise:

- electric motor which drives the actuator system;
- actuator arm configured to be moved from point A to point B along the movement path (optionally also backwards);
- mechanical transmission system that translates the rotational movement of the electric motor into the specific movement path of the actuator arm;
- control system configured for switching off the voltage on the electric motor at point B.

More particularly the present invention relates to the actuator systems wherein DC brushed motors are used, and the actuator arm, when moving from point A to point B, is stopped at point B by a mechanical barrier.

The electric current in DC brushed motors exhibits spikes when a brush makes contact with adjacent segments of the commutator. As a result, the number of these spikes per complete revolution of the motor rotor remains essentially constant.

One of the possible solutions in the state of the art to deactivate the voltage supply to the electric motor when the actuator arm reaches point B is, for example, to measure the current through the electric motor, and when the current reaches a certain predetermined threshold, which is indicative of the actuator arm making contact with the mechanical barrier, the voltage supply to the electric motor is automatically shut off. Another solution is to use the position sensor for monitoring the position of the actuator arm. When the actuator arm reaches point B, the signal from the position sensor is used to switch off the electric motor. It is also known that the approximate position of the actuator arm can be determined by counting the number of current spikes produced when the brush contacts adjacent segments of the commutator, as for example disclosed in US 2005/0282484.

The actuator system according to the present invention seeks to improve the existing solutions by measuring the current through the electric motor, modifying the current signal to extract and count the spikes in the current signal and by regulating the voltage on the electric motor according to a predefined algorithm depending on the measured values of the electric current and on the number of spikes in the electric current.

The electric actuator system according to the present invention eliminates the necessity for additional sensors to detect the actuator arm's position. Furthermore, it minimizes system damage resulting from the hard stop, namely the actuator arm striking a mechanical barrier, notably reducing stress-related damage to the mechanical transmission system and electric motor, as well as limiting the current surges. Additionally, it operates according to an algorithm that enables application of a self-learning subroutine, which optimizes the system's performance with each iteration. The optimization addresses contradictory goals that are desired for the electric actuator systems with a hard stop. On the one hand, it is desired that the movement of the actuator arm from points A to B is as fast as possible, so to achieve that, full voltage on the electric motor is needed. On the other hand, at point B, where the hard stop occurs, namely the actuator arm hits the mechanical barrier, lower voltage on the electric motor is preferred, so that the mechanical stress on the system is reduced due to lower speed of the mechanical arm hitting the mechanical barrier, and that the electrical stress on the system is reduced due to lower current surges.

The actuator system with controlled hard stop according to the present invention comprises:

- an electric motor, which is implemented as a DC brushed motor, namely comprising a brush and a commutator with segments, which drives the actuator system;
- an actuator arm configured to be moved from point A to point B along the movement path (optionally also backwards);
- a mechanical transmission system that translates the rotational movement of the electric motor into the specific movement path of the actuator arm; and
- a control system configured to measure the current through the electric motor and regulate the voltage on the electric motor.

The control system comprises the following components:

- a current measuring device, for example a shunt resistor or an ammeter, for measuring instantaneous value of the electric current through the electric motor, thereby producing a current signal which reflects the instantaneous value of the electric current.
- a conversion subsystem which is configured to convert the current signal into a countable signal which contains information on each spike in the electric current with negligible time delay relative to the current signal, wherein the spikes are produced when the brush contacts adjacent segments of the commutator;
- a logic subsystem operating according to an algorithm, which is predefined, producing voltage control signals; and
- a voltage control subsystem controlling the voltage (voltage level and polarity) on the electric motor according to the voltage control signals.

The invention will be further described by way of example, with reference to the following drawings:

Figure 1 shows an embodiment of the mechanical transmission system with the electric motor to be used with the electric actuator system according to the invention.

Figure 2 shows a schematic representation of the actuator system according to the invention.

Figure 3 shows a schematic representation of an embodiment of the conversion subsystem.

Figure 4 shows characteristics of an embodiment of the band pass filter.

Figure 5 shows an embodiment of the algorithm operating on the logic subsystem.

Figure 6 shows an embodiment of the self-learning subroutine of the algorithm.

Figure 7 shows an embodiment of a low pass filter, with its frequency characteristics, that is used in the conversion subsystem.

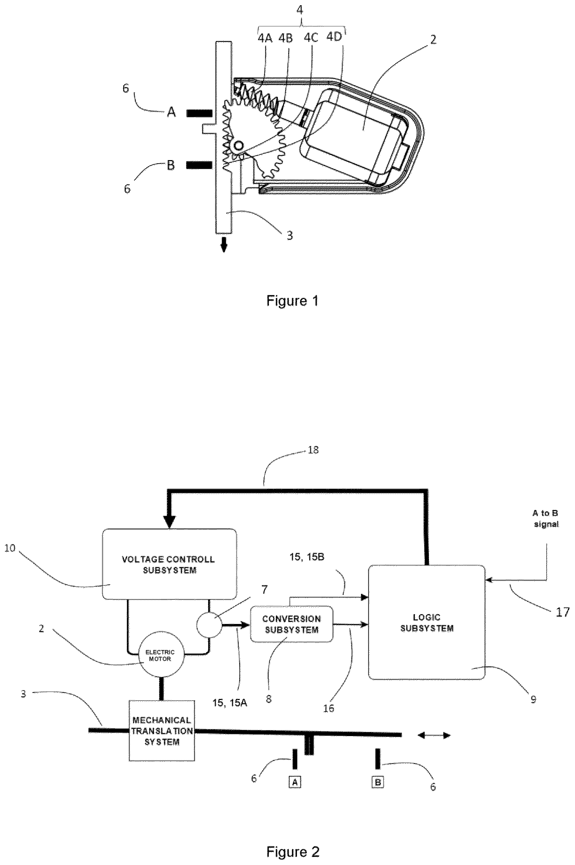

In the embodiment shown in Figure 1, a rotor of the electric motor 2 is fixedly attached to a worm gear 4A which meshes with a larger gear 4B that is fixedly connected to a smaller gear 4C on the same shaft, wherein the smaller gear 4C mashes with a toothed rack 4D attached to or integrated into the actuator arm 3. Hence, the mechanical transmission system 4 comprises the following parts: the worm gear 4A, the larger gear 4B, the smaller gear 4C and the toothed rack 4D.

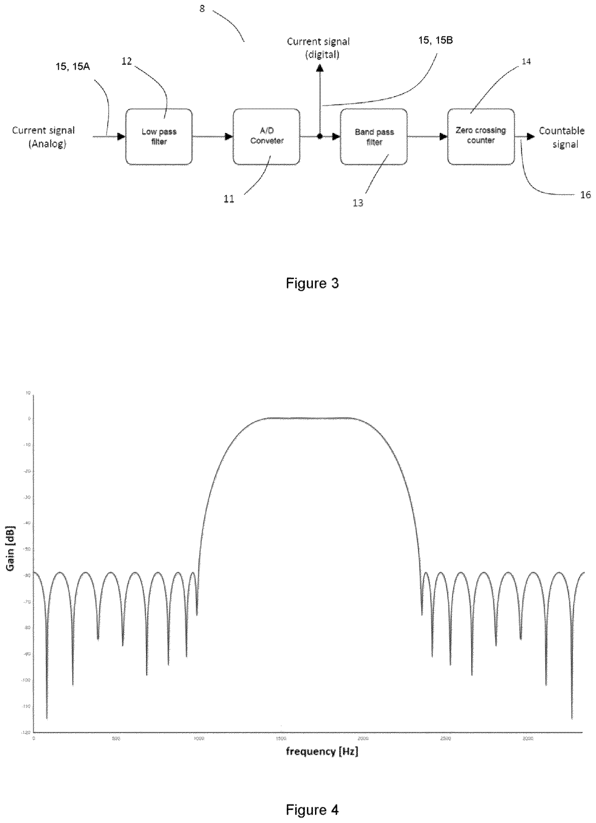

In a preferred embodiment, shown in Figure 2, the current measuring device 7 is implemented as a shunt resistor. The voltage on the shunt resistor is directly proportional to the current, so it is used as an analog current signal 15A. In this embodiment, the conversion subsystem 8 is configured also to convert the analog current signal 15A into a digital current signal 15B, as shown in Figure 2 and 3.

In other embodiments, not shown in Figures, the current measuring device is implemented as a digital ammeter, thereby producing the digital current signal, namely a digitalized version of instantaneous value of the electric current.

In general, the conversion subsystem 8 is configured to convert the current signal 15 into the countable signal 16, wherein the countable signal 16 comprises information on the number of spikes that are produced when the brush contacts adjacent segments of the commutator with negligible time delay relative to the current signal 15.

The logic subsystem 9 receives the following signals:

- the countable signal 16 from the output of the conversion subsystem 8,
- the current signal 15 from the current measuring device 7, either directly or through the conversion subsystem 8, as shown in Figure 2 and 3, and
- an AtoB move signal 17, which is produced, for example, by a switch.

Based on these signals and according to the predefined algorithm the logic subsystem 9 produces voltage control signals 18, such as a no voltage signal, a full voltage signal and a lower voltage signal, with one or another polarity. The voltage control signals 18 are received by the voltage control subsystem 10 which manages the voltage level and/or polarity on the electric motor 2. The voltage control subsystem 10 manages the voltage supplied to the electric motor 2 using one of various known methods, such as regulating the voltage level directly or adjusting the amplitude and/or duration of PWM (Pulse Width Modulation) pulses.

As shown in Figure 3, one of possible embodiments of the conversion subsystem 8 comprises the following components:

- A lowpass filter 12, with a predefined cutting frequency $f_c$ to eliminate or reduce the high frequency noise in the analog signal.
- An AD converter 11 to convert the analog signal into the digital signal. In this embodiment, the output of the AD converter 11 represents the digital current signal 15B and is connected to the logic subsystem 9 for the purposes of detecting the current surges due to the actuator arm 3 hitting the mechanical barrier 6 in order to produce the no voltage signal.
- A bandpass filter 13, preferably implemented as a software FIR bandpass filter, to further refine the signal by isolating frequencies within a predefined frequency range, which is a predefined parameter of the system.
- A zero crossing counter 14. The output of the bandpass filter 13 is connected to the input of the zero crossing counter 14. The number of zero crossings in the signal is proportional to the number of spikes in the current signal 15. At the output of the zero crossing counter 14 the countable signal 16 is produced which contains information on the number of spikes in the current signal 15.

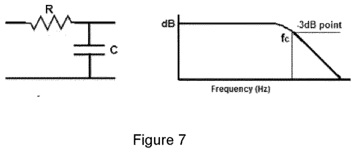

In the embodiment of the conversion subsystem 8 as shown in Figure 3, a simple version of a low pass filter 12 is used, with a cutting frequency $f_c$ and comprising a resistor and a capacitor. This low pass filter 12 with its frequency characteristic is shown in Figure 7. The cutting frequency $f_c$ depends on a concrete application. Typically, $f_c$ is in the range of 1 kHz to 5 kHz, and in this embodiment, $f_c$ equals 3,6 kHz.

To further increase the reliability of the conversion subsystem 8, namely producing the countable signal 16 of appropriate accuracy, optionally, the frequency range of the band pass filter 13 may be changed during operation based on additional control signals from the logic subsystem 9, as described below.

The logic subsystem 9 operates according to the algorithm and produces at least three voltage control signals 18, which respectively correspond to voltage states on the output of the voltage control subsystem 10 and consequently on the electric motor 2:

- the no voltage signal which corresponds to a no voltage state on the electric motor 2,
- the full voltage signal which corresponds to a normal/full voltage state on the electric motor 2, for example 15V,
- the lower voltage signal which corresponds to a lower voltage state on the electric motor 2, for example 8V.

One iteration of the algorithm comprises the following steps:

a. Initially the actuator arm 3 is at point A. The voltage control subsystem 10 is in the no voltage state. The logic subsystem 9 awaits for an AtoB move signal 17.

b. When an AtoB move signal 17 is received, the full voltage signal is produced and the spikes are started to be counted from the countable signal 16 and the number of spikes is recorded into a present counter PC. At the beginning of the iteration the initial value of the present counter PC is zero; if not, it is set to zero.

c. The value of the present counter PC is continuously compared to the value of a reduction count RC. The value of the reduction count RC is constant during one iteration. In some embodiments the reduction count RC is constant during all iterations. In another embodiments the reduction count RC is adjusted from one iteration to another in a self-learning subroutine (as described below). The reduction count RC represents the approximate distance from point A but not yet reaching point B, namely point C, where the lower voltage signal is produced, so that the voltage on the electric motor 2 is reduced, so when the actuator arm 3 hits the mechanical barrier 6 at point B, the mechanical and electric stress on the system are reduced.

d. When the value of the present counter PC reaches the value of the reduction count RC, the lower voltage signal is produced which results in lower voltage state on the electric motor 2, and slower movement of the actuator arm 3 toward point B.

e. Simultaneously with steps b through d above, the measured instantaneous value of the electric current is also observed and compared to a current maximum, which is a predefined parameter of the system. When the actuator arm 3 hits the mechanical barrier 6 at point B, the value of the current significantly increases. This current surge, when detected, is used to produce a no voltage state. Namely, when the current signal 15, which reflects the measured instantaneous value of the electric current, reaches the current maximum, the no voltage signal is produced, which results in the no voltage state on the electric motor 2, i.e. the electric motor 2 is switched off. Therefore, when the actuator arm 3 reaches point B, the electric motor 2 is switched off, and this iteration of the algorithm is successfully completed.

Optionally, the start of counting of spikes in step b is initially delayed by a count time delay, which is a predefined parameter of the system, for example up to 20 ms, in order to avoid errors in counting spikes due to transients during the sudden increase of the current when the electric motor 2 is switched on.

Optionally, the no voltage signal is triggered also if a time from receiving the AtoB signal reaches a max time limit, which is a predefined parameter of the system, or if the present counter reaches a max count limit, which is also a predefined parameter of the system. The max time limit is set to be larger than expected time to move the actuator arm 3 from point A to point B, so that the electric motor 2 is switched off for precautionary reasons if the task is not performed within the expected time. The max count limit is set so that the actuator arm 3 does not move significantly beyond point B for precautionary reasons, for example in cases where the mechanical barrier 6 is not in place.

Optionally, the algorithm includes a minimum time limit, which is a predefined parameter of the system, and usually is up to several hundred milliseconds, for example 200 ms. This feature temporarily prevents triggering of the no voltage signal within the minimum time limit period after receiving the AtoB move signal 17. It addresses the issue of the electric motor 2 turning off undesirably during the initial current surge, potentially reaching the current maximum, after being activated and initiating movement of the actuator arm 3.

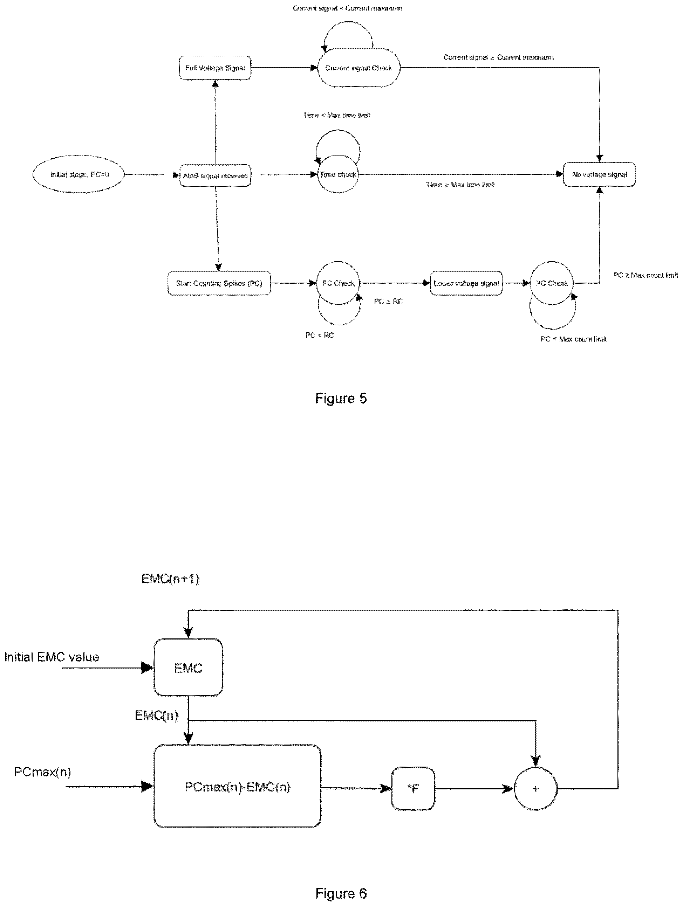

Figure 5 shows an embodiment of the algorithm comprising steps a through e above, with two optional features, namely the no voltage signal is triggered also when time reaches the max time limit, and when the present counter PC reaches a max count limit.

In a preferred embodiment, the algorithm contains a self-learning subroutine in order to change the reduction count RC if necessary from one iteration to the next, based on a maximum value of the present counter PC from one or many of the previous iterations, preferably from the previous iteration, resulting in point C gradually moving toward point B up to a desired proximity, which is predefined and represented by a number D, as explained below.

The self-learning subroutine in one possible embodiment, shown in Figure 6 is implemented as follows. One of the parameters of the system is an estimated max count EMC, which represents a number of spikes that corresponds to the estimated distance between point A and point B. Initially, the estimated max count EMC is defined according to an initial estimation and is predefined parameter of the system. However, after each iteration, the estimated max count EMC for the next iteration is calculated based on the estimated max count EMC from the previous iteration and the maximum value of the present counter PC from the previous iteration.

The reduction count RC in an iteration equals to the estimated max count EMC minus the number D, which is a predefined parameter of the system, which corresponds to a desired proximity of point C, where the low voltage signal is triggered, to point B.

This may be expressed with the following equation:

$$RC = EMC - D \hspace{4cm} \text{Equation 1}$$

wherein RC stands for the reduction count, EMC stands for the estimated max count, and D stands for the number D. In other words, the number D represents the desired proximity of point C to point B in terms of expected number of spikes in the electric current between point C and point B.

In one of more preferred embodiment, the number D is constant during the self-learning subroutine, and the estimated max count EMC is calculated anew from one iteration to the next, as will be explained below. For example, if the estimated max count EMC, i.e. the distance from point A to point B, corresponds to 4500 spikes, the number D may be set to 200.

In this embodiment, shown in Figure 6, the estimated max count EMC for the next iteration is calculated according to the following equation:

$$EMC(n+1) = EMC(n) + F * ( PCmax(n) - EMC(n) ) \hspace{2cm} \text{Equation 2}$$

the result being rounded to the closest integer;

wherein EMC(n+1) represents the estimated max count for the next iteration, EMC(n) represents the estimated max count from the previous iteration, PCmax(n) represents a maximum value of the present counter from the previous iteration, and F represents a factor F, which is a predefined parameter of the system, and is larger than 0 and lower than 1, preferably larger than 0.1 and lower than 0.5, more preferably larger than 0.15 and lower than 0.3, more preferably 0.2.

The expression ( PCmax(n) - EMC(n) ) may be positive or negative, depending on whether the maximum value of the present counter PC is larger or lower than the estimated max count EMC from the previous iteration. Thereby the adjustment of the estimated max count EMC from one iteration to the next can be achieved in both directions.

When the factor F is larger, the estimated max count EMC converges more quickly to the actual position of point B from one iteration to the next, although this increases the likelihood of oscillations around point B. Conversely, when the factor F is smaller, the estimated max count converges more slowly to the actual position of point B, but the likelihood of oscillations is reduced.

By applying the self-learning subroutine, the estimated max count EMC, regardless of its initial predefined value, is gradually adjusted from one iteration to the next, to more accurately represent the exact distance between points A and B. As a result, it is not necessary for the estimated maximum count EMC, as initially predefined, to be precise, because it will adjust to the actual distance during iterations. This approach is particularly advantageous when the system is used in various applications with differing distances between points A and B. The system allows the use of identical electronic components and predefined parameters, wherein the estimated max count EMC will automatically and gradually adjust to the optimal value. Additionally, if the distance between points A and B changes over the system's lifetime, the self-learning subroutine will adapt to these changes, maintaining optimal operation.

In a more preferred embodiment of the self-learning subroutine, the estimated max count EMC is corrected from one iteration to the next, as defined above, only if the following additional conditions are met in the previous iteration:

- the present counter PC has reached the reduction count RC;
- the no voltage state has been triggered due to the current signal reaching the current maximum; and not for example due to time reaching a max time limit or the present counter PC reaching the max count limit.

If these additional conditions are not met in the previous iteration, the estimated max count EMC remains the same for the next iteration. These additional conditions guarantee that the task of moving the actuator arm 3 from point A to point B in the previous iteration has been completed successfully and that the actuator arm 3 indeed hit the mechanical barrier 6. In this case, the estimated max count EMC can be adjusted so that in the next iteration point C, represented in the system by the reduction count RC (see equation 1 above), where the lower voltage state is triggered, is moved closer to the desired proximity (number D) to point B. If point C is already sufficiently close to point B such that PCmax(n) = EMC(n), the estimated max count EMC remains unchanged (refer to Equation 2 above). By applying these additional conditions, the reliability of the self-learning subroutine is improved, because only if the additional conditions are met, the system has performed as expected, so no errors are introduced into the system via the self-learning subroutine.

The self-learning subroutine can involve other possible methods how to calculate the reduction count RC in the next iteration based on the number of spikes from the previous iterations. For example, to calculate the estimated max count EMC and consequently the reduction count RC in the next iteration, two maximum values of the present counter PC are used, namely from the previous iteration and from two iterations ago, so the system has more memory and the adjustments are more gradual. This embodiment of the self-learning subroutine may be represented by the following equation:

$$EMC(n+1) = EMC(n) + F1 * ( PCmax(n) - EMC(n) ) + F2 * ( PCmax(n-1) - EMC(n-1) ) \qquad \text{Equation 3}$$

the result being rounded to the closest integer;
wherein EMC(n+1), EMC(n), PCmax(n) are defined as above, and PCmax(n-1) represents the maximum value of the present counter from two iterations ago, EMC(n-1) represents the estimated max count from two iterations ago, F1 represents a factor F1, which is larger than 0 and lower than 1, and functions as a weight attributed to the previous iteration, and F2 represents a factor F2, which is larger than 0 and lower than 1, and functions as a weight attributed to the iteration before the previous iteration (ie two iterations ago).

In some embodiments, the frequency range of the bandpass filter is different depending on whether the voltage control signal is in the full voltage state or in the low voltage state, so there are two frequency ranges: the frequency range FR1 being active during the full voltage state and the frequency range FR2 being active during the lower voltage state. In these embodiments the logic subsystem 9 produces corresponding additional control signals according to the algorithm, communicated to the bandpass filter 13 in the conversion subsystem 8, for timely selecting the appropriate frequency ranges FR1 or FR2.

In a preferred embodiment of the system, it is also enabled that the actuator arm 3 is moved back by the electric motor 2 from point B to point A. All above said can be applied analogously also to such backward movement, wherein the initial position of the actuator arm 3 is at point B and the target position is at point A. In this case the voltage control signals 18 comprise also a voltage polarity control signal received by the voltage control subsystem 10 which determines the polarity of the voltage on the electric motor 2 and thereby the direction of its rotation and consequently the direction of movement of the actuator arm 3.

In some embodiments, the system's predefined parameters and variables - such as the full voltage, the lower voltage, the estimated max count EMC, the reduction count RC, the current maximum, the max time limit, the max count limit, the minimum time limit, the number D, the factor F, the frequency range(s) of the band pass filter 13 — may vary between forward and backward movements. This disparity arises from differing circumstances; for instance, the forces exerted on the actuator arm 3 and its required velocity may differ between forward and backward movements. In such cases, the self-learning subroutine, described above, preferably learns from the previous iteration in the same direction.

The selection of the appropriate parameters and variables depending on the direction of the movement is implemented by the algorithm through the additional control signals from the logic subsystem 9.

As mentioned above, in some embodiments, some system parameters, such as the frequency range of the bandpass filter 13, may vary also depending on whether the system is in low voltage state or in full voltage state. In general, selection of the system parameters may depend on many circumstances, such as the direction of the movement and/or on the voltage state.

In general, any of the predefined parameters and variables of the system, such as the full voltage , the lower voltage, the estimated max count EMC, the reduction count RC, the current maximum, the max time limit, the max count limit, the minimum time limit, the number D, the factor F, the frequency range(s) of the band pass filter 13, may have different values depending on the voltage state and/or the direction of the movement of the actuator arm 3. which is implemented by the additional control signals from the logic subsystem 9. The selection of the corresponding predefined parameters and variables is implemented by the algorithm through the additional control signals from the logic subsystem (9).

Optionally, the voltage control subsystem 10 may be implemented in a way that transitions of voltage from zero to the full voltage state is gradual within a predefined transition time, for example the voltage increases from 0 to 15 V in 20 ms. Similarly, the transition from the full voltage state (for example 15 V) to the lower voltage state (for example 8 V) is gradual, for example within 20 ms. By applying these gradual transitions from one voltage state to another, the occurrence of undesired transient phenomena is diminished. These gradual voltage transitions on the electric motor 2, managed by the voltage control subsystem 10, can be achieved using established methods, such as through the corresponding programming of the electronic components within the voltage control subsystem 10.

Optionally, a sequence of activities in steps b through d are implemented within the logic subsystem 9 and the voltage control subsystem 10 independently from implementation of a sequence of activities in step e, meaning that two separate sets of electric components are used for implementation of each sequence.

In embodiment that is different from that shown in Figures 2 and 3 the current measuring device 7 may be implemented as a digital ammeter which produces the digital version of the current signal 15. Correspondingly, the signal path carrying digital current signal 15B may be connected directly to the logic subsystem 9 for the purposes of comparing it to the current maximum, to produce the no voltage signal, when the digital current signal 15B reaches the current maximum. In this embodiment, the conversion subsystem 8 which also receives the digital current signal 15B does not comprise the AD converter 11 and the analog low pass filter 12, but still comprises the band pass filter 13 and the zero crossing counter 14.

In a preferred embodiment, the voltage control subsystem 10, digital components of the conversion subsystem 8 and the logic subsystem 9 are implemented by using a system-on-chip, comprising a central processing unit, memory storage elements and other components of a computer, for example MOTIX™ TLE9867QXA20 by the manufacturer Infineon Technologies.

The sampling frequency of the AD converter 11 depends on the capacity of the processor(s) used in the system (bandpass filter 13, zero crossing counter 14, logic subsystem 9). It can be from 1kHz to 30kHz, preferably from 5kHz to 10 kHz. The higher the sampling frequency, the more reliably spikes in the current signal are detected, albeit at the expense of requiring greater processor capacity.

The method according to the invention corresponds to the above described algorithm.

## Claims

1. The actuator system with controlled hard stop comprises:

   - an electric motor (2), which is implemented as a DC brushed motor, comprising a brush and a commutator with segments, which drives the actuator system;
   - an actuator arm (3) configured to be moved from point A to point B along a movement path;
   - a mechanical transmission system (4) that translates the rotational movement of the electric motor (2) into the movement path of the actuator arm (3);
   **characterized in that** the actuator system comprises a control system configured to measure the current through the electric motor (2) and to regulate the voltage on the electric motor (2); wherein the control system comprises:

      - a current measuring device (7) configured to measure instantaneous value of the electric current through the electric motor (2), thereby producing a current signal (15) which reflects the instantaneous value of the electric current;
      - a conversion subsystem (8) configured to convert the current signal (15) into a countable signal (16) which contains information on each spike in the electric current, wherein the spikes are produced when the brush contacts adjacent segments of the commutator in the electric motor (2);

- a logic subsystem (9) operating according to an algorithm producing voltage control signals (18); and
- a voltage control subsystem (10) controlling the voltage level and polarity on the electric motor (2) based on the voltage control signals (18) and according to the algorithm;

wherein the logic subsystem (9) receives the countable signal (16) from the output of the conversion subsystem (8), the current signal (15) from the current measuring device (7), either directly or through the conversion subsystem (8), and an AtoB move signal (17);

wherein the logic subsystem (9) produces voltage control signals (18), namely at least a no voltage signal, a full voltage signal and a lower voltage signal, with one or another polarity; and the voltage control signals (18) are received by the voltage control subsystem (10) which manages the voltage level and/or polarity on the electric motor (2);

wherein the no voltage signal corresponds to a no voltage state on the electric motor (2), the full voltage signal corresponds to a normal/full voltage state on the electric motor (2), and the lower voltage signal corresponds to a lower voltage state on the electric motor (2);

wherein one iteration of the algorithm comprises the following steps:

a. initially the actuator arm (3) is at point A; the voltage control subsystem (10) is in the no voltage state; and the logic subsystem (9) awaits the AtoB move signal (17); the initial value of a present counter (PC) is zero;

b. when the AtoB move signal (17) is received, the full voltage signal is produced and the spikes in the current signal (15) are started to be counted from the countable signal (16) and the number of spikes is recorded into the present counter (PC);

c. the value of the present counter (PC) is continuously compared to the value of a reduction count (RC) which represents the approximate distance from point A but not yet reaching point B, namely point C;

d. when the value of the present counter (PC) reaches the value of the reduction count (RC), the lower voltage signal is produced which results in lower voltage state on the electric motor (2);

e. simultaneously with steps b through d above, the current signal (15) is compared to a current maximum, and when the current signal (15) reaches the current maximum, the no voltage signal is produced.

2. The actuator system according to claim 1, **characterized in that**, the current measuring device (7) is implemented as a shunt resistor and the voltage thereon is used as an analog current signal 15A and the conversion subsystem (8) is configured also to convert the analog current signal (15A) into a digital current signal (15B).

3. The actuator system according to any claim from 1 through 2, **characterized in that**, the conversion subsystem (8) comprises the following components:

- a lowpass filter (12), with a predefined cutting frequency ($f_c$)configured to eliminate or reduce the high frequency noise;
- an AD converter (11) configured to convert the analog current signal (15A) into the digital current signal (15B);
- a bandpass filter (13), preferably implemented as a software FIR bandpass filter, configured to isolate frequencies within a predefined frequency range; and
- a zero crossing counter (14);

wherein the output of the bandpass filter (13) is connected to an input of the zero crossing counter (14), and wherein at an output of the zero crossing counter (14) the countable signal (16) is produced; wherein an output of the AD converter (11) also represents the digital current signal (15B) and is connected to the logic subsystem (9).

4. The actuator system according to claim 1, **characterized in that**, the current measuring device (7) is implemented as a digital ammeter which produces the digital version (15B) of the current signal (15), and a signal path carrying the digital current signal (15B) is connected directly to the logic subsystem (9) for the purposes of comparing the digital current signal (15B) to the current maximum; wherein the conversion subsystem (8) which also receives the digital current signal (15B) does not comprise the AD converter (11) and the analog low pass filter (12), but comprises the band pass filter (13) and the zero crossing counter (14).

5. The actuator system according to any claim from 1 through 4, **characterized in that**, the no voltage signal is triggered also if a time from receiving the AtoB signal (17) reaches a max time limit and/or if the present counter (PC) reaches a max count limit.

6. The actuator system according to any claim from 1 through 5, **characterized in that**, the start of counting of spikes in step b is initially delayed by a count time delay.

7. The actuator system according to any claim from 1 through 6, **characterized in that**, the triggering of the no voltage signal is temporarily prevented within a minimum time limit period after receiving the AtoB move signal (17).

8. The actuator system according to any claim from 1 through 7, **characterized in that**, the algorithm contains a self-learning subroutine to change the reduction count (RC) if necessary from one iteration to the next, based on a maximum value of the present counter (PC) from one or many of the previous iterations, preferably from the previous iteration.

9. The actuator system according to claim 8, **characterized in that**, the reduction count (RC) is defined by the following equation

$$RC = EMC - D$$

wherein RC stands for the reduction count, EMC stands for the estimated max count, and D stands for the number D, which represents the desired proximity of point C to point B in terms of expected number of spikes in the electric current between point C and point B.

10. The actuator system according to any claim from 8 through 9, **characterized in that**, the estimated max count (EMC) for the next iteration is calculated according to the following equation:

$$EMC(n+1) = EMC(n) + F * ( PCmax(n) - EMC(n) )$$

the result being rounded to the closest integer;
wherein EMC(n+1) represents the estimated max count for the next iteration, EMC(n) represents the estimated max count from the previous iteration, PCmax(n) represents a maximum value of the present counter (PC) from the previous iteration, and F represents a factor F, which is larger than 0 and lower than 1, preferably larger than 0.1 and lower than 0.5, more preferably larger than 0.15 and lower than 0.3, more preferably 0.2.

11. The actuator system according to any claim from 8 through 10, **characterized in that**, the estimated max count (EMC) is corrected from one iteration to the next, only if the following additional conditions are met in the previous iteration:

   • the present counter (PC) has reached the reduction count (RC);
   • the no voltage state has been triggered due to the current signal (15) reaching the current maximum.

12. The actuator system according to any claim from 1 through 11, **characterized in that**, the actuator arm (3) is enabled to move back by the electric motor (2) from point B to point A, so that the initial position of the actuator arm (3) is at point B and the target position is at point A, wherein the voltage control signals (18) comprise also a voltage polarity control signal which determines the polarity of the voltage on the electric motor (2) and thereby the direction of its rotation and consequently the direction of movement of the actuator arm (3); wherein all that holds for the forward movement of the actuator arm (3) from point A to point B holds analogously also for the backwards movement from point B to point A.

13. The actuator system according to any claim from 1 through 12, **characterized in that**, the voltage control subsystem (10) is configured to enable gradual transition from one voltage state to another voltage state within a predefined transition time.

14. The actuator system according to any claim from 1 through 13, **characterized in that**, any of the predefined parameters and variables of the system, such as the full voltage, the lower voltage, the estimated max count (EMC), the reduction count (RC), the current maximum, the max time limit, the max count limit, the minimum time limit, the number D, the factor F, the frequency range(s) of the band pass filter (13), may have different values depending on the voltage state and/or the direction of the movement of the actuator arm (3); wherein the selection of the corresponding predefined parameters and variables is implemented by the algorithm through additional control signals from the logic subsystem (9).

15. A method for operating the actuator system according to any of the claims 1 through 14, **characterized in that**, one iteration of the method comprises the following steps:

a. initially the actuator arm (3) is at point A; the voltage control subsystem (10) is in the no voltage state; and the logic subsystem (9) awaits the AtoB move signal (17); the initial value of a present counter (PC) is zero;

b. when the AtoB move signal (17) is received, the full voltage signal is produced and the spikes in the current signal (15) are started to be counted from the countable signal (16) and the number of spikes is recorded into the present counter (PC);

c. the value of the present counter (PC) is continuously compared to the value of a reduction count (RC) which represents the approximate distance from point A but not yet reaching point B, namely point C;

d. when the value of the present counter (PC) reaches the value of the reduction count (RC), the lower voltage signal is produced which results in lower voltage state on the electric motor (2);

e. simultaneously with steps b through d above, the current signal (15) is compared to a current maximum, and when the current signal (15) reaches the current maximum, the no voltage signal is produced.

16. The method according to claim 15, **characterized in that**, the method contains a self-learning subroutine to change the reduction count (RC) if necessary from one iteration to the next, based on a maximum value of the present counter (PC) from one or many of the previous iterations, preferably from the previous iteration.

Figure 1

Figure 2

Figure 3

Figure 4

Current signal < Current maximum

Full Voltage Signal → Current signal Check

Current signal ≥ Current maximum

Time < Max time limit

Initial stage, PC=0 → AtoB signal received → Time check

Time ≥ Max time limit

No voltage signal

Start Counting Spikes (PC) → PC Check → Lower voltage signal → PC Check

PC ≥ RC

PC < RC

PC ≥ Max count limit

PC < Max count limit

Figure 5

EMC(n+1)

Initial EMC value → EMC

EMC(n)

PCmax(n) → PCmax(n)-EMC(n) → *F → +

Figure 6

Figure 7

Europäisches
Patentamt

European
Patent Office

Office européen
des brevets

# EUROPEAN SEARCH REPORT

**Application Number**

EP 24 19 2703

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2008/100245 A1 (TURNER LARRY A [US])<br>1 May 2008 (2008-05-01)<br>* paragraph [0100] *<br>* paragraph [0031]; figure 17 *<br>* paragraph [0229]; figure 16 *<br>* paragraph [0196] *<br>* paragraph [0034] *<br>* paragraph [0232] *<br>* paragraph [0098]; figures 4, 10 *<br>* paragraph [0247]; figure 19b *<br>* paragraph [0114]; figure 10a *<br>* paragraph [0193] *<br>* paragraph [0191] *<br>* paragraph [0227]; figure 16 *<br>* paragraph [0101] *<br>----- | 1-9,<br>12-16<br>10,11 | INV.<br>H02P7/00 |
| Y | US 2024/128901 A1 (OLJACA MIROSLAV [US] ET<br>AL) 18 April 2024 (2024-04-18)<br>* paragraph [0025]; figure 3 *<br>* paragraph [0029]; figure 5 *<br>----- | 1,15 | |
| Y<br>A | GB 1 087 030 A (FELTEN & GUILLEAUME<br>CARLSWERK) 11 October 1967 (1967-10-11)<br>* page 2, line 61 - line 80 *<br>----- | 1,15<br>10,11 | **TECHNICAL FIELDS SEARCHED (IPC)**<br><br>H02P |
| Y | US 2014/001815 A1 (TANAKA SOICHIRO [JP] ET<br>AL) 2 January 2014 (2014-01-02)<br>* figure 1 *<br>----- | 1,15 | |
| Y<br>A | WO 2019/052906 A1 (CONTINENTAL AUTOMOTIVE<br>GMBH [DE]) 21 March 2019 (2019-03-21)<br>* figure 2 *<br>----- | 1,15<br>10,11 | |

The present search report has been drawn up for all claims

| Place of search | Date of completion of the search | Examiner |
|---|---|---|
| Munich | 5 February 2025 | Fligl, Stanislav |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
............................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 19 2703

05-02-2025

| Patent document cited in search report | | | Publication date | Patent family member(s) | | | Publication date |
|---|---|---|---|---|---|---|---|
| US 2008100245 | A1 | | 01-05-2008 | NONE | | | |
| US 2024128901 | A1 | | 18-04-2024 | NONE | | | |
| GB 1087030 | A | | 11-10-1967 | DE | 1234831 | B | 23-02-1967 |
| | | | | GB | 1087030 | A | 11-10-1967 |
| US 2014001815 | A1 | | 02-01-2014 | CN | 103688460 | A | 26-03-2014 |
| | | | | EP | 2688197 | A1 | 22-01-2014 |
| | | | | US | 2014001815 | A1 | 02-01-2014 |
| | | | | WO | 2012124674 | A1 | 20-09-2012 |
| WO 2019052906 | A1 | | 21-03-2019 | KR | 20190031778 | A | 27-03-2019 |
| | | | | WO | 2019052906 | A1 | 21-03-2019 |

For more details about this annex : see Official Journal of the European Patent Office, No. 12/82

REFERENCES CITED IN THE DESCRIPTION

**Patent documents cited in the description**

- EP 2166180 A2
- US 20050282484 A